# EUROPÄISCHE PATENTSCHRIFT

(11) **EP 3 276 309 B1**
(45) Veröffentlichungstag und Bekanntmachung des Hinweises auf die Patenterteilung: **16.03.2022**
(21) Anmeldenummer: 17181415.5
(22) Anmeldetag: 14.07.2017
(51) Int. Cl.: G01D 5/14, G01D 5/241, F16C 23/10

(54) **WINKELSENSOR ZUM ERFASSEN EINES DREHWINKELS**
ROTARY ENCODER FOR DETECTING A ROTATIONAL ANGLE
CAPTEUR D'ANGLE PERMETTANT DE DÉTECTER UN ANGLE DE ROTATION

(30) Priorität: 27.07.2016 DE 102016213775
(43) Veröffentlichungstag der Anmeldung: 31.01.2018
(73) Patentinhaber: Continental Teves AG & Co. OHG, 60488 Frankfurt am Main (DE)
(72) Erfinder: Krohn, Thomas, 65824 Schwalbach (DE); Kotlaja, Aleksandar, 63179 Obertshausen (DE); Brüggemann, Stephan, 60431 Frankfurt/Main (DE)
(74) Vertreter: Continental Corporation

(56) Entgegenhaltungen:
- DE-A1- 4 227 474
- DE-A1- 19 637 967
- DE-A1-102015 211 459
- DE-C- 671 432
- DE-T2- 69 717 592
- US-A- 1 325 553
- US-A- 4 755 066

## Beschreibung

Die Erfindung betrifft einen Winkelsensor zum Erfassen eines Drehwinkels basierend auf einer relativen Winkellage eines physikalischen Feldes nach dem Oberbegriff des Anspruchs 1 sowie ein Verfahren zur Herstellung eines solchen Winkelsensors.

Eine bekannte Anwendung für Winkelsensoren sind Höhenstandssensoren in Fahrzeugen, die dazu dienen, die Höhe eines Karosserieteils gegenüber einer Fahrzeugachse oder in anderer Betrachtungsweise den Einfederweg eines Fahrzeugrades relativ zur Karosserie zu erfassen.

Dabei ist ein Gehäuse mit einem Sensorelement fest mit der Karosserie verbunden. Das Sensorelement befindet sich beispielsweise auf einem am Gehäuse befestigten Schaltungsträgersubstrat. An oder in dem Gehäuse ist ein Hebel drehbar gelagert, der, meist mittels eines Gestänges, mit der Aufhängung des Rades verbunden ist. Erfolgt beim Fahren eine Relativbewegung zwischen Rad und Karosserie, so führt dies zu einer Drehbewegung des Hebels. Der Hebel ist fest mit einer drehbaren Welle verbunden, an der sich ein Sensorelement befindet. Das zu diesem Sensorelement korrespondierende Sensorelement des Gehäuses ermöglicht die Erfassung des Drehwinkels der Welle. Oftmals wird als Sensorelement ein zylindrisch geformter Magnet eingesetzt, der stirnseitig in das Wellenende eingeklebt ist. Das andere Sensorelement, beispielsweise in Form eines Hall-Sensors, erfasst über die Änderung des Magnetfelds die Drehung der Welle. Da die mechanische Übersetzung von der linearen Bewegung zur Drehbewegung bekannt ist, kann der Messwert dieses Sensorelements in die momentane Höhe bzw. den Einfederweg umgerechnet werden.

Um hierbei Messfehler, wie z. B. Nichtlinearität, einzudämmen, müssen die Sensorelemente möglichst konzentrisch und in einem genau definierten, gleichbleibenden Abstand angeordnet sein. Hieraus resultiert die Notwendigkeit, über die gesamte Lebensdauer ein sehr geringes Spiel der Welle sicherzustellen.

Zur Lagerung der Welle im Gehäuse wird üblicherweise die Welle direkt in einer Bohrung des Gehäuses gelagert, was jedoch ein großes Spiel der Welle mit sich bringt und die Optimierung der Lagerfläche durch geeignetes Material und geeignete Bearbeitung erschwert. Alternativ wäre es möglich eine metallische Lagerbuchse in eine Gehäusebohrung einzupressen. Die Gehäusebohrung und die Lagerbuchse müssen bei dieser Bauweise entsprechend sehr eng toleriert sein, was zu hohen Kosten führt und nur begrenzt gewährleistet werden kann. Die Summe der vorzuhaltenden Toleranzen führt dabei nachteiligerweise zu einem großen magnetischen Nenn-Luftspalt in axialer Richtung zwischen den Sensorelementen. Kritisch sind unter anderem die Positionstoleranzen des Schaltungsträgers, der Sensorelemente, der Welle sowie der Lagerbuchse und der Gehäusebohrung, als auch Rundlauffehler der Welle sowie die Magnetisierung des Magneten.

### <Seite 2a>

Die DE 10 2014 218 716 A1 beschreibt ein Verfahren zur Herstellung eines Winkelsensors, bei dem ein Grundkörper des Lagers durch eine in diesen eingeführte Welle plastisch verformt wird, so dass die Welle ihr Lager selbst formt. Damit geht jedoch ein gewisser Aufwand einher und nicht alle kritischen Faktoren, die zu Messfehlern führen können, werden adressiert.

Der Erfindung liegt die Aufgabe zugrunde, einen Winkelsensor bereitzustellen, der kostengünstig ist und eine geringe Anfälligkeit für Fehler hat.

Das Dokument DE 196 37 967 A1 beschreibt einen Winkelsensor, bei dem eine präzise Lagerung mit Hilfe einer umlaufenden Nut und einem komplementär ausgebildeten Vorsprung angestrebt wird.

Das Dokument US 1 325 553 A beschreibt ein Wellenlager mit zwei exzentrisch ausgebildeten Lagerschalen.

Diese Aufgabe wird erfindungsgemäß dadurch gelöst, dass das Wellenlager von mindestens zwei separaten Lagersegmenten gebildet wird, die jeweils einen Teil des Lagerumfangs abdecken.

Vorteilhafte Ausgestaltungen der Erfindung sind Gegenstand der Unteransprüche.

Die Erfindung geht von der Überlegung aus, dass eine Welle in einem Wellenlager exakt ausgerichtet sein sollte, damit sie sich im Wellenlager präzise und ohne Versatz drehen kann. Dazu sollte die Position der Welle innerhalb des Wellenlagers möglichst eindeutig definiert sein, so dass diese in beiden axialen Richtungen nahezu unverschiebbar ist. Eine entsprechende Ausprägung der Lager-Welle-Paarung behindert jedoch den Montageprozess des Winkelsensors, bei dem die Komponenten durch axiale Verschiebung in die richtige Position gebracht werden müssen.

Hier setzt die Erfindung mit dem Vorschlag an, die Lager-Welle-Paarung herzustellen, indem mehrere Lagersegmente die Lagerfläche bilden. Auf diese Weise kann eine hochpräzise Positionierung auf herstelltechnisch einfache Weise gewährleistet werden, denn die Lagersegmente decken jeweils einen Teil des Lagerumfangs ab. Damit umfassen die Schnittstellen der Lagersegmente die gesamte Länge des Wellenlagers, so dass die Lagersegmente durch radiale Verschiebung statt durch axiale Verschiebung montiert werden können. Die Lagersegmente können somit auf Anschlag montiert werden. Das axiale Spiel kann dadurch vorteilhafterweise sehr genau und sehr gering festgelegt werden.

Im Sinne der Erfindung wird unter einem physikalischen Feld vorzugsweise die räumliche Verteilung einer physikalischen Größe verstanden, beispielsweise ein Magnetfeld, ein Elektrisches

Feld, ein Temperaturfeld, ein Dichtefeld oder ein Gravitationsfeld. Die relative Winkellage eines physikalischen Feldes ergibt sich vorzugsweise aus der Ausrichtung der räumlichen Verteilung.

Im Sinne der Erfindung wird unter einem Wellenlager vorzugsweise ein Element zum beweglichen Führen einer Welle verstanden, wobei der Begriff des Wellenlagers sich vom Begriff der Wellenlagerung dadurch abgrenzt, dass er alleine auf das Element gerichtet ist, während der Begriff der Wellenlagerung das Zusammenspiel des Elements und der Welle betrifft. Im Sinne der Erfindung umgibt ein Wellenlager vorzugsweise eine zu lagernde Welle umfänglich, weshalb ihm ein Lagerumfang sowie eine mit der Wellenachse zusammenfallende Achse zugeschrieben werden kann.

Vorzugsweise ist die Lagerfläche an einem verjüngten Bereich der Welle oder an einem erhabenen Bereich der Welle angeordnet, an dessen Enden das Wellenlager gegen axiales Verschieben gesichert ist. Diese Anordnung ermöglicht eine sehr präzise Positionierung der Welle gegenüber dem Wellenlager, bei der das axiale Spiel gering gehalten wird. Vorzugsweise ist das Wellenlager durch Wellenschultern gegen axiales Verschieben gesichert.

In einer bevorzugten Ausführungsform bilden die Lagersegmente eine zylinderförmige oder konische Hülse um die Welle. Das so gebildete Wellenlager ist einfach und kostengünstig in der Herstellung.

Bevorzugt wird eine Ausführungsform, bei der das Wellenlager mit einer ersten Auflagefläche an einer Schulter des Aufnahmebereichs anliegt. Eine solche axiale Sicherung ist im Betrieb stabil und außerdem einfach herzustellen.

Vorzugsweise ist das Wellenlager mit einer zweiten Auflagefläche spaltlos an dem Gehäuse fixiert. Dadurch wird das Spiel minimiert.

Bevorzugterweise ist das Wellenlager an der zweiten Auflagefläche durch verstemmte, als Nietköpfe ausgebildete Dome oder durch eine verstemmte umlaufende Rippe an dem Gehäuse fixiert. Dies stellt eine sehr effiziente und kostengünstige Möglichkeit zur Minimierung des Spiels dar. Bevorzugt sind die Dome dabei entlang der Auflagefläche gleichmäßig angeordnet.

In einer bevorzugten Ausführungsform besteht das Wellenlager zum größten Teil oder vollständig, aus Kunststoff. Dies verringert die Beeinflussung des axialen und radialen Spiels durch Temperaturänderungen.

Vorzugsweise weist die Lagerfläche des Wellenlagers ein Gleitmittel, vorzugsweise Polytetrafluorethylen, auf.

In einer bevorzugten Ausführungsform sind die Lagersegmente durch Haken, Klammern, Verstemmdome, Schrauben oder Nieten aneinander befestigt.

Es ist bevorzugt, dass das Wellenlager außenseitig an dem Gehäuse anliegt, so dass die Lagersegmente zusammengehalten werden. Auf diese Weise wird das Wellenlager im Gehäuse stabilisiert und radiales Spiel minimiert.

Vorzugsweise ist zwischen zwei Lagersegmenten ein Schmiermittel-Speicher ausgebildet. Dies ermöglicht eine stetige Schmierung und damit gute Laufeigenschaften des Wellenlagers, ohne dass das Wellenlager bzw. das Gehäuse dabei durch den Schmiermittel-Speicher an Kompaktheit verliert.

Bevorzugt ist der Aufnahmebereich des Gehäuses als Sackloch ausgebildet. Eine mögliche Schmutz-Kontaminierung des Gehäuseinnenraums mit dem zweiten Sensorelement und der Elekronik wird dadurch von vorneherein ausgeschlossen.

Nach einem Aspekt der Erfindung weist ein Verfahren zum Herstellen des Winkelsensors die folgenden Schritte auf:
- Ausstatten der Welle mit dem ersten Sensorelement und des Gehäuses mit dem zweiten Sensorelement,
- Befestigen der Lagersegmente aneinander um die Welle, so dass die Lagersegmente das Wellenlager bilden und jeweils einen Teil des Lagerumfangs abdecken,
- Einführen der Welle mit dem Wellenlager in einen Aufnahmebereich des Gehäuses und axiales Sichern des Wellenlagers.

Vorzugsweise umfasst dabei das axiale Sichern des Wellenlagers das Verstemmen von als Nietköpfe ausgebildeten Domen oder das Verstemmen einer umlaufenden Rippe an dem Gehäuse, so dass eine Hinterschneidung entsteht, die das Wellenlager axial gegenüber dem Gehäuse sichert.

Der Winkelsensor wird bevorzugt in einem Höhenstandssensor eines Fahrzeuges eingesetzt.

Die Vorteile der Erfindung liegen insbesondere darin, dass die axialen Toleranzen klein gehalten werden können, was zu einem verringerten Nenn-Luftspalt zwischen den Sensorelementen führt und die Robustheit des Winkelsensors gegenüber Messfehlern erhöht. Das axiale und radiale Spiel, das für die relative Anordnung der Sensorelemente entscheidend ist, kann gering ausfallen und präzise eingehalten werden. Darüber hinaus besteht eine große Variabilität hinsichtlich der Herstellungsmethode und des Materials des Wellenlagers. Außer dem Bereich der Lager-Welle-Paarung besteht auch hinsichtlich der Ausgestaltung der Welle eine große Variabilität.

Ein Ausführungsbeispiel der Erfindung wird anhand von Zeichnungen näher erläutert. Darin zeigen in schematisierter Darstellung:
- FIG. 1: eine beispielhafte Darstellung eines Winkelsensors in einer Außenansicht;
- FIG. 2: eine beispielhafte Darstellung einer Welle eines Winkelsensors in einer Teilschnitt-Darstellung sowie ein Lagersegment;
- FIG. 3: eine beispielhafte Darstellung des Zusammenspiels der Welle und des Lagersegments aus FIG. 2;
- FIG. 4: eine beispielhafte Darstellung des Zusammenspiels der Welle und eines aus zwei Lagersegmenten gebildeten Wellenlagers;
- FIG. 5: eine beispielhafte Darstellung eines Gehäuses eines Winkelsensors in einer Teilschnitt-Darstellung;
- FIG. 6: eine beispielhafte Darstellung des Gehäuses aus FIG. 5 in einer Teilschnitt-Darstellung mit der Welle und dem Wellenlager aus FIG. 4;
- FIG. 7: eine beispielhafte Darstellung des Zusammenspiels von Welle, Wellenlager und Gehäuse aus FIG. 6 in einer Teilschnitt-Darstellung;
- FIG. 8: eine beispielhafte Teilschnitt-Darstellung der Konfiguration aus FIG. 7 nach einem weiteren Herstellungs schritt
- FIG. 9: eine beispielhafte Darstellung eines Winkelsensors mit einem unbefestigten Hebel in einer Teilschnitt-Darstellung;
- FIG. 10: eine beispielhafte Teilschnitt-Darstellung des Winkelsensors aus FIG. 9 mit befestigtem Hebel;
- FIG. 11: eine beispielhafte Vollschnitt-Darstellung des Zusammenspiels von Gehäuse, Wellenlager und Welle.

Gleiche Teile sind in allen Figuren mit denselben Bezugszeichen versehen.

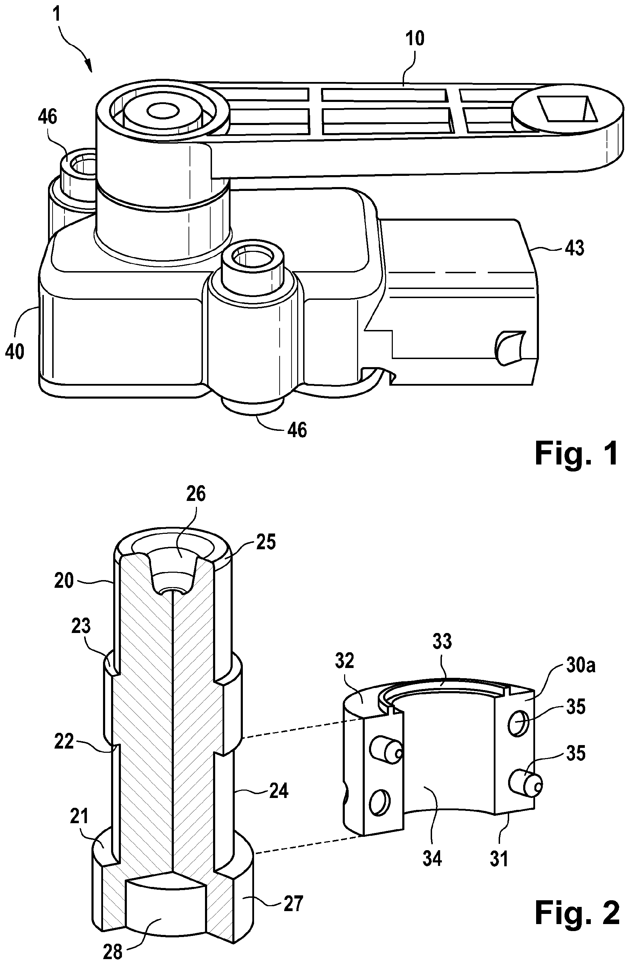

Ein Winkelsensor 1, der im Ausführungsbeispiel als Höhenstandssensor Anwendung findet, ist schematisch in FIG. 1 dargestellt. Der Winkelsensor 1 weist einen Hebel 10 auf, der an einem Ende mit dem Teil (nicht dargestellt) verbunden werden kann, dessen relative Bewegung erfasst werden soll. Dazu kann zur Bildung eines Gestänges auch ein zweiter Hebel zwischen dem Hebel 10 und dem Teil vorgesehen sein. Das andere Ende des Hebels 10 ist fest mit einer Welle 20 verbunden, die in der Figur verdeckt ist. Die Welle 20 ragt in einen Aufnahmebereich 47 eines Gehäuses 40, das Befestigungsvorrichtungen 46 sowie einen Anschlussbereich 43 für elektrische Leitungen aufweist. Sowohl die Welle 20, als auch das Gehäuse 40 bestehen in diesem Ausführungsbeispiel aus Kunststoff. Mit den Befestigungseinrichtungen 46 kann das Gehäuse 40 an einem Teil der Fahrzeugkarosserie befestigt werden, so dass es möglich ist über den Hebel 10 bzw. das Gestänge eine lineare Relativbewegung, beispielsweise einer Fahrzeugachse, zu erfassen.

In FIG. 2 ist die Welle 20 des Winkelsensors 1 schematisch dargestellt. Sie weist eine über die Länge abgestufte Kontur auf. Ein verjüngter Bereich, der durch eine erste Wellenschulter 21 und eine zweite Wellenschulter 22 begrenzt wird, bildet eine wellenseitige Lagerfläche 24. Diese weist eine glatte Oberfläche auf, um Drehbewegungen zu erleichtern. Eine dritte Wellenschulter 23 dient beispielsweise als Auflagefläche für den Hebel 10. Um eine Befestigung des Hebels 10 mittels Verstemmung zu erleichtern, ist der Wellenkopf 25 mit einer Ausnehmung 26 versehen. Dadurch ist beim Verstemmen weniger Kraft zur Verformung des Wellenkopfes 25 nötig. Am Wellenfuß 27 ist ein erstes Sensorelement 28 in die Welle 20 integriert, das mit dem Wellenfuß 27 plan abschließt. Eine vollständig umschließende Einbindung des ersten Sensorelements 28 in die Welle 20 ist an dieser Stelle ebenso denkbar wie eine Klebeverbindung oder andere gängige Befestigungsmöglichkeiten.

Das in FIG. 2 ebenfalls dargestellte erste Lagersegment 30a weist in Bezug auf die lagerseitige Lagerfläche 34 eine Länge auf, die mit der Länge der wellenseitigen Lagerfläche 24 im Wesentlichen übereinstimmt, höchstens aber genauso groß ist. Die lagerseitige Lagerfläche 34 wird in Achsrichtung durch eine erste Auflagefläche 31 und eine zweite Auflagefläche 32 abgeschlossen. Diese Auflageflächen 31, 32 könnten auch, anders als in FIG. 2 dargestellt, jeweils abgestuft sein, so dass der radial innen liegende Teil der Auflagefläche 31 bzw. 32 in Achsrichtung an einer anderen Position ausgebildet ist, als der radial außen liegende Teil der jeweiligen Auflagefläche 31 oder 32. Es ist ohne Weiteres denkbar, dass jeweils eine umlaufende Lagerrippe 33 an beiden Enden des Lagersegments 30a die Trennung zwischen dem radial innen liegenden Teil und dem radial außen liegenden Teil der jeweiligen Auflagefläche 31 bzw. 32 bildet. Sie dient einer radialen Sicherung der Welle 20 in dem von den Lagersegmenten 30a, 30b gebildeten Wellenlager 30. In diesem Ausführungsbeispiel ist jedoch nur an der zweiten Auflagefläche 32 eine solche Lagerrippe 33 ausgebildet. Die radiale Innenseite des Lagersegments 30a bildet dessen lagerseitige Lagerfläche 34 und weist gute Gleiteigenschaften auf. Sie wird dazu durch eine Beschichtung mit Polytetrafluorethylen gebildet. Die Fixiereinrichtungen 35 zur gegenseitigen Befestigung der Lagersegmente 30a, 30b können als Haken, Klammern, Verstemmdome, Schrauben, Nieten oder in Form anderer dem Fachmann hierzu bekannter Mittel ausgeführt sein.

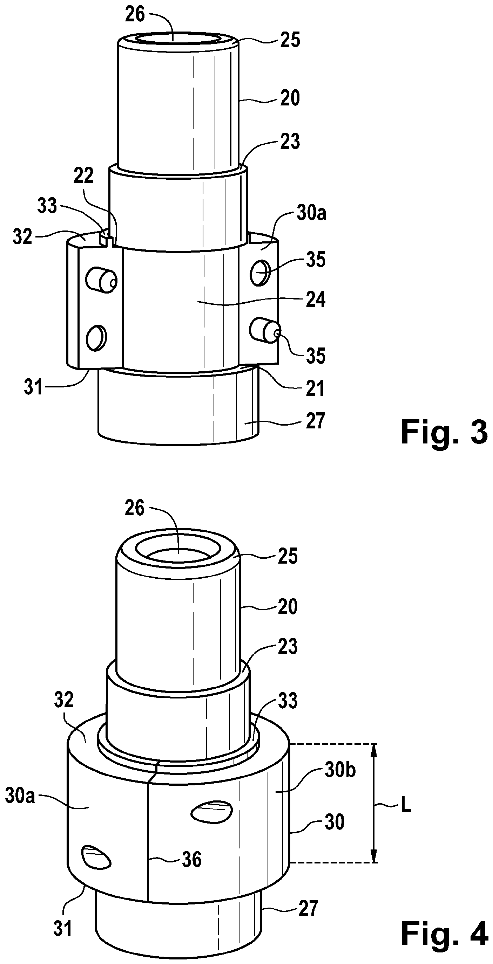

In FIG. 3 ist das Zusammenspiel der Welle und des Lagersegments aus FIG. 2 beispielhaft dargestellt. Es ist zu erkennen, dass das Lagersegment 30a in dem verjüngten Bereich der Welle 20, der durch die erste Wellenschulter 21 und die zweite Wellenschulter 22 begrenzt wird, mit der lagerseitigen Lagerfläche 34 an der wellenseitigen Lagerfläche 24 anliegt. Die erste Wellenschulter 21 liegt dabei an der ersten Auflagefläche 31 an und die zweite Wellenschulter 21 liegt an der zweiten Auflagefläche 32 sowie an der umlaufenden Lagerrippe 33 an.

Eine Anordnung, bei der die wellenseitige Lagerfläche 24 nicht als verjüngter Bereich der Welle 20, sondern als erhabener Bereich ausgebildet ist, wäre als Alternative ebenso denkbar und steht dem Erfindungsgedanke nicht entgegen. Die Lagersegmente 30a, 30b, bzw. das Wellenlager 30 wären in diesem Fall mit einer Nut ausgebildet, deren Breite dem erhabenen Bereich der Welle 20 entspricht. An den Rändern der Nut wäre die Welle 20 relativ zu dem von den Lagersegmenten 30a, 30b gebildeten Wellenlager 30 axial gesichert.

In FIG. 4 sind die beiden Lagersegmente 30a, 30b mittels der Fixiereinrichtungen 35 aneinander befestigt und bilden ein im Wesentlichen zylinderförmiges Wellenlager 30, insbesondere ein Gleitlager, für die Lagerung der Welle 20 in dem Aufnahmebereich 47 des Gehäuses 40. Die Schnittstellen 36 der Lagersegmente 30a, 30b umfassen die gesamte Länge L des Wellenlagers. Insbesondere verlaufen die Schnittstellen 36 gerade und parallel zur Mittelachse des Wellenlagers 30.

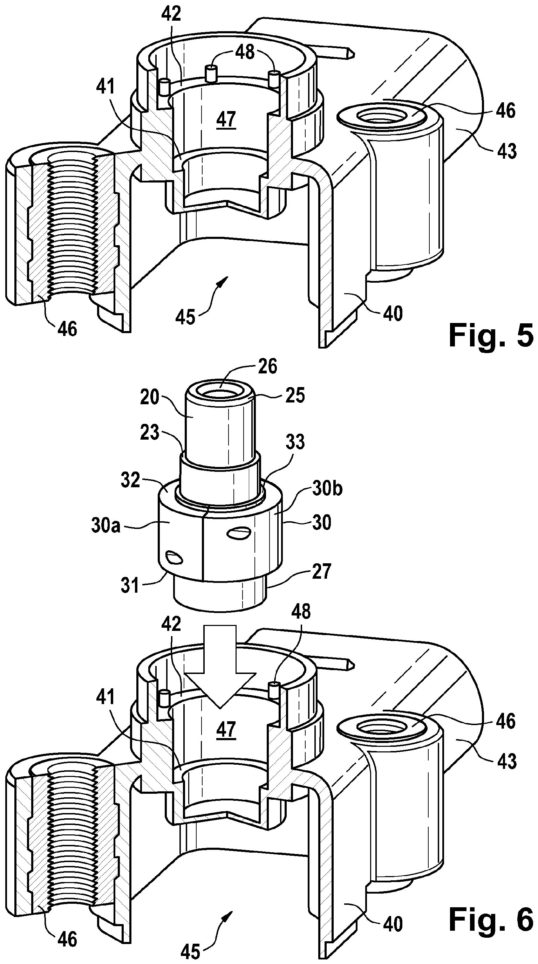

Das Gehäuse 20 ist in FIG. 5 in einer Schnittdarstellung gezeigt, die Details des Aufnahmebereichs 47 verdeutlicht. Der Einbau der Welle 20 ist zu diesem Zeitpunkt noch nicht erfolgt. Zur besseren Kenntlichkeit ist die Gehäuseabdeckung 44 nicht dargestellt. Der Aufnahmebereich 47 ist als Sackloch ausgebildet und ist somit undurchlässig. Der Elektronikbereich 45 des Gehäuses 40 ist dadurch sicher vor Verunreinigungen, die in den Aufnahmebereich 47 gelangen könnten. In axialer Richtung weist der Aufnahmebereich 47 eine abgestufte Kontur auf.

Der Verfahrensschritt, bei dem die Welle 20 mit dem zuvor an ihr montierten Wellenlager 30 in den Aufnahmebereich 47 des Gehäuses 40 eingeführt wird, ist in FIG. 6 schematisch dargestellt.

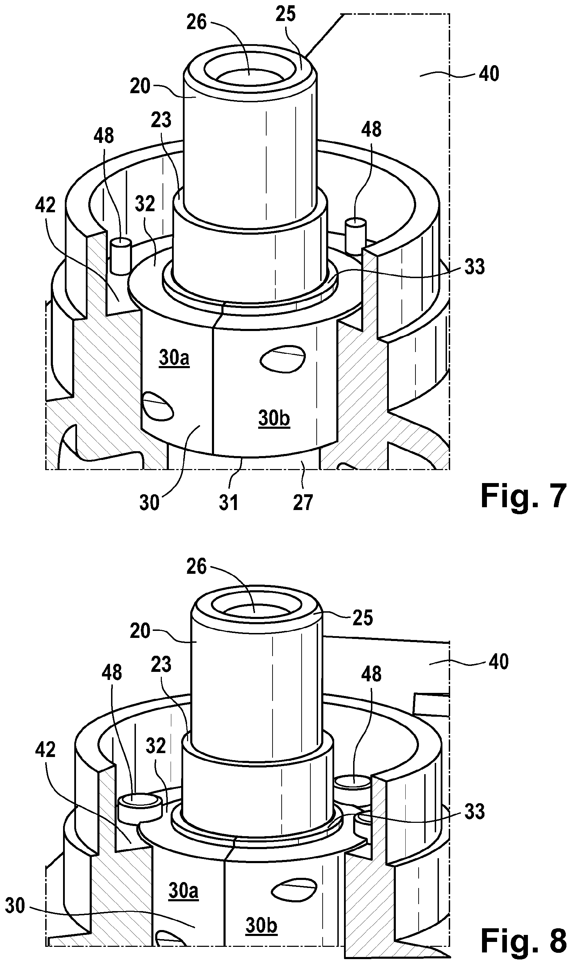

Wie in der vergrößerten Darstellung der FIG. 7 erkennbar ist, liegt das Wellenlager 30 mit der ersten Auflagefläche 31 auf einer ersten Gehäuseschulter 41 auf. Eine zweite Gehäuseschulter 42 ist bündig oder zumindest näherungsweise bündig mit der zweiten Auflagefläche 32 des Wellenlagers 30. Auf der zweiten Gehäuseschulter sind umlaufend mehrere Befestigungselemente 48 in Form von Nietköpfen ausgeformt, die zur Befestigung des Wellenlagers 30 plastisch verformbar sind. Dazu wird, im Sinne eines Verstemm-Vorgangs, eine axiale Kraft auf die Nietköpfe aufgebracht, so dass diese sich plastisch verformen und eine starre, spaltlose Verbindung zwischen dem Gehäuse 40 und dem Wellenlager 30 bewirken, wie in FIG. 8 dargestellt. Statt der dargestellten Nietköpfe wären als Befestigungselemente beispielsweise auch Schraubverbindungselemente oder Klebestellen denkbar.

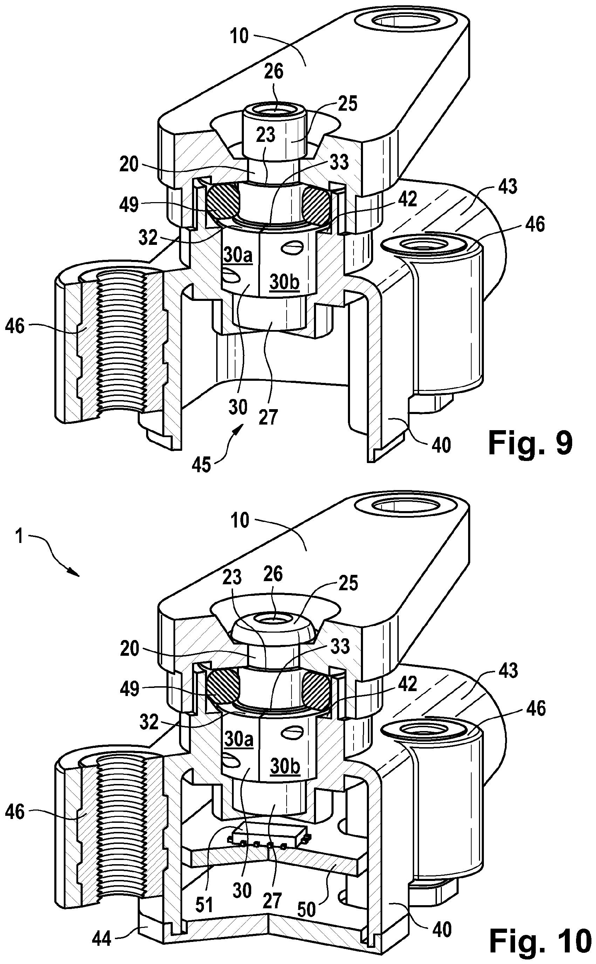

Der in FIG. 9 dargestellte Aufbau zeigt schematisch die Montageeinheit der Welle 20 mit dem Wellenlager 30 im Aufnahmebereich 47 des Gehäuses sowie den auf die Welle 20 aufgesetzten Hebel 10. Dabei liegt der Hebel 10 auf der dritten Wellenschulter 23 auf. Er überkragt die Öffnungsseite des Aufnahmebereichs 47, so dass eine Labyrinthdichtung gebildet wird. Als zusätzliche Maßnahme gegen den Eintritt von Verunreinigungen in den Aufnahmebereich 47 ist eine ringförmige Dichtung 49 so angeordnet, dass Verunreinigungen, die durch den Spalt zwischen Hebel 10 und Gehäuse 40 kommen, abgefangen werden.

FIG. 10 zeigt die endgültige Konfiguration des Winkelsensors nach einem weiteren Schritt der Herstellung. Der Wellenkopf 25 wurde durch Einwirkung einer Axialkraft plastisch verformt und der Hebel 10 so mit der Welle verstemmt. In der Schnittansicht der FIG. 10 sind auch eine Trägerplatte 50 mit einem zweiten Sensorelement 51 sowie eine Gehäuseabdeckung 44 dargestellt, die in den vorhergehenden Figuren, der Übersicht halber, nicht dargestellt wurden.

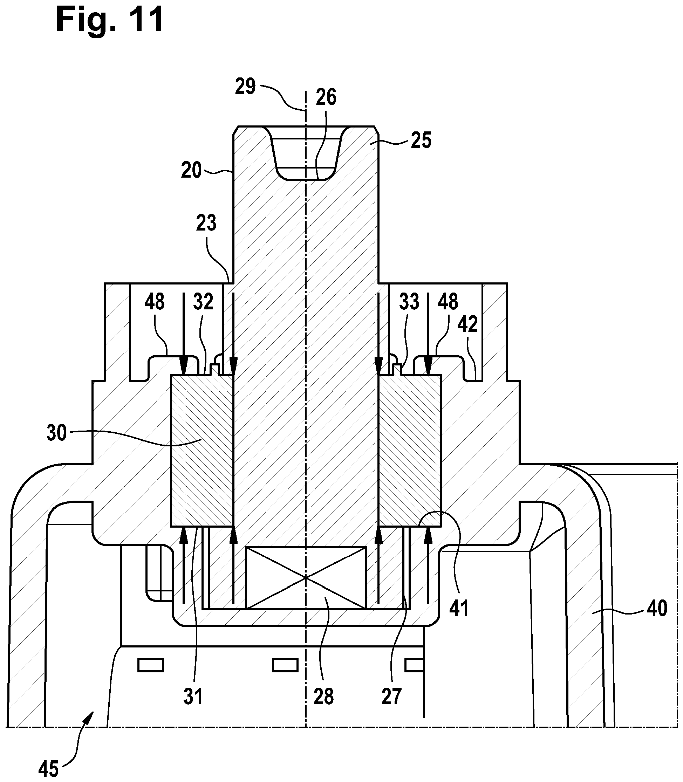

Die axialen Kräfte, die zur präzisen gegenseitigen axialen Positionierung von Welle, Wellenlager und Gehäuse führen, sind in FIG. 11 in einer Vollschnitt-Darstellung schematisch dargestellt. Es ist zu erkennen, dass die Welle 20, das Wellenlager 30 und der Aufnahmebereich konzentrisch angeordnet sind, so dass sie eine gemeinsame Achse 29 aufweisen. Der Spalt zwischen dem Wellenfuß 27 bzw. dem ersten Sensorelement 28 und dem Boden des Aufnahmebereichs 47 ist sehr gering und daher in der Darstellung nicht erkennbar. Die axiale und radiale Position der Welle 20 und damit des ersten Sensorelements 28 ist in Folge der dargestellten Axialkräfte präzise definiert, so dass es bei der Wechselwirkung zwischen den Sensorelementen 28, 51 nicht zu Schwankungen kommen kann.

### Bezugszeichenliste

- 1: Winkelsensor

- 10: Hebel

- 20: Welle
- 21: erste Wellenschulter
- 22: zweite Wellenschulter
- 23: dritte Wellenschulter
- 24: wellenseitige Lagerfläche
- 25: Wellenkopf
- 26: Ausnehmung
- 27: Wellenfuß
- 28: erstes Sensorelement
- 29: Achse

- 30: Wellenlager
- 30a: erstes Lagersegment
- 30b: zweites Lagersegment
- 31: erste Auflagefläche
- 32: zweite Auflagefläche
- 33: umlaufende Lagerrippe
- 34: lagerseitige Lagerfläche
- 35: Fixiereinrichtungen
- 36: Schnittstellen
- L: Länge des Wellenlagers

- 40: Gehäuse
- 41: erste Gehäuseschulter
- 42: zweite Gehäuseschulter
- 43: Anschlussbereich
- 44: Gehäuseabdeckung
- 45: Elektronikbereich
- 46: Befestigungsvorrichtungen
- 47: Aufnahmebereich
- 48: Befestigungselemente
- 49: Dichtung

- 50: Trägerplatte
- 51: zweites Sensorelement

## Patentansprüche

1. Winkelsensor (1) zum Erfassen eines Drehwinkels basierend auf einer relativen Winkellage eines physikalischen Feldes, umfassend
- ein erstes und ein zweites Sensorelement (28, 51), zwischen denen das physikalische Feld übertragbar ist, wobei das erste Sensorelement (28) als Geberelement und das zweite Sensorelement (51) als Nehmerelement ausgebildet ist oder umgekehrt,
- eine Welle (20) an der das erste Sensorelement (28) fixiert ist,
- ein Gehäuse (40) an dem das zweite Sensorelement (51) fixiert ist, wobei das Gehäuse (40) einen Aufnahmebereich (47) zur Aufnahme der Welle (20) umfasst,
- ein Wellenlager (30) mit einer lagerseitigen Lagerfläche (34) zur Lagerung der Welle (20) in dem Aufnahmebereich (47) des Gehäuses (40),
**dadurch gekennzeichnet, dass** das Wellenlager (30) von mindestens zwei separaten Lagersegmenten (30a, 30b) gebildet wird, die jeweils einen Teil des Lagerumfangs abdecken, wobei das Wellenlager (30) mit einer zweiten Auflagefläche (32) durch verstemmte, als Nietköpfe ausgebildete Dome oder durch eine verstemmte umlaufende Rippe spaltlos an dem Gehäuse (40) fixiert ist.

2. Winkelsensor (1) nach Anspruch 1, **dadurch gekennzeichnet, dass** die lagerseitige Lagerfläche (34) an einem verjüngten Bereich der Welle (20) oder an einem erhabenen Bereich der Welle (20) angeordnet ist, an dessen Enden das Wellenlager (30) gegen axiales Verschieben gesichert ist.

3. Winkelsensor (1) nach Anspruch 2, **dadurch gekennzeichnet, dass** das Wellenlager (30) durch Wellenschultern (21, 22) gegen axiales Verschieben gesichert ist.

4. Winkelsensor (1) nach einem der vorhergehenden Ansprüche, **dadurch gekennzeichnet, dass** die Lagersegmente (30a, 30b) eine zylinderförmige oder konische Hülse um die Welle (20) bilden.

5. Winkelsensor (1) nach einem der vorhergehenden Ansprüche, **dadurch gekennzeichnet, dass** das Wellenlager (30) mit einer ersten Auflagefläche (31) an einer Schulter des Aufnahmebereichs (47) anliegt.

6. Winkelsensor (1) nach einem der vorhergehenden Ansprüche, **dadurch gekennzeichnet, dass** das Wellenlager (30) zum größten Teil oder vollständig, aus Kunststoff besteht.

7. Winkelsensor (1) nach einem der vorhergehenden Ansprüche, **dadurch gekennzeichnet, dass** die lagerseitige Lagerfläche (34) ein Gleitmittel, vorzugsweise Polytetrafluorethylen, aufweist.

8. Winkelsensor (1) nach einem der vorhergehenden Ansprüche, **dadurch gekennzeichnet, dass** die Lagersegmente (30a, 30b) durch Haken, Klammern, Verstemmdome, Schrauben oder Nieten aneinander befestigt sind.

9. Winkelsensor (1) nach einem der vorhergehenden Ansprüche, **dadurch gekennzeichnet, dass** das Wellenlager (30) außenseitig an dem Gehäuse (40) anliegt, so dass die Lagersegmente (30a, 30b) zusammengehalten werden.

10. Winkelsensor (1) nach einem der vorhergehenden Ansprüche, **dadurch gekennzeichnet, dass** zwischen zwei Lagersegmenten (30a, 30b) ein Schmiermittel-Speicher ausgebildet ist.

11. Winkelsensor (1) nach einem der vorhergehenden Ansprüche, **dadurch gekennzeichnet, dass** der Aufnahmebereich (47) des Gehäuses (40) als Sackloch ausgebildet ist.

12. Verfahren zum Herstellen eines Winkelsensors (1) nach einem der vorhergehenden Ansprüche, **dadurch gekennzeichnet, dass** es die folgenden Schritte aufweist:
- Ausstatten der Welle (20) mit dem ersten Sensorelement (28) und des Gehäuses (40) mit dem zweiten Sensorelement (51),
- Befestigen der Lagersegmente (30a, 30b) aneinander um die Welle (20), so dass die Lagersegmente (30a, 30b) das Wellenlager (30) bilden und jeweils einen Teil des Lagerumfangs abdecken,
- Einführen der Welle (20) mit dem Wellenlager (30) in einen Aufnahmebereich (47) des Gehäuses (40) und axiales Sichern des Wellenlagers (30), wobei das axiale Sichern des Wellenlagers (30) das Verstemmen der als Nietköpfe ausgebildeten Dome oder das Verstemmen der umlaufenden Rippe an dem Gehäuse umfasst, so dass eine Hinterschneidung entsteht, die das Wellenlager (30) axial gegenüber dem Gehäuse (40) sichert.

## Claims

1. Angle sensor (1) for detecting an angle of rotation on the basis of a relative angular position of a physical field, comprising
- a first and a second sensor element (28, 51), between which the physical field can be transmitted, the first sensor element (28) being designed as an encoder element and the second sensor element (51) being designed as a receiver element, or vice versa,
- a shaft (20), on which the first sensor element (28) is fixed,
- a housing (40), on which the second sensor element (51) is fixed, the housing (40) comprising a receiving region (47) for receiving the shaft (20),
- a shaft bearing (30) with a bearing-side bearing surface (34) for mounting the shaft (20) in the receiving region (47) of the housing (40),
**characterized in that** the shaft bearing (30) is formed by at least two separate bearing segments (30a, 30b), which respectively cover part of the bearing circumference, the shaft bearing (30) being fixed without any gap on the housing (40) by a second supporting surface (32) by means of caulked domes, formed as rivet heads, or by means of a caulked peripheral rib.

2. Angle sensor (1) according to Claim 1, **characterized in that** the bearing-side bearing surface (34) is arranged on a tapered region of the shaft (20) or on a raised region of the shaft (20), at the ends of which the shaft bearing (30) is secured against axial displacement.

3. Angle sensor (1) according to Claim 2, **characterized in that** the shaft bearing (30) is secured against axial displacement by means of shaft shoulders (21, 22) .

4. Angle sensor (1) according to one of the preceding claims, **characterized in that** the bearing segments (30a, 30b) form a cylindrical or conical sleeve around the shaft (20).

5. Angle sensor (1) according to one of the preceding claims, **characterized in that** the shaft bearing (30) lies with a first supporting surface (31) against a shoulder of the receiving region (47).

6. Angle sensor (1) according to one of the preceding claims, **characterized in that** shaft bearing (30) consists largely or completely of plastic.

7. Angle sensor (1) according to one of the preceding claims, **characterized in that** the bearing-side bearing surface (34) has a non-stick coating, preferably polytetrafluoroethylene.

8. Angle sensor (1) according to one of the preceding claims, **characterized in that** the bearing segments (30a, 30b) are fastened to one another by hooks, clips, caulking domes, screws or rivets.

9. Angle sensor (1) according to one of the preceding claims, **characterized in that** the shaft bearing (30) lies against the housing (40) on the outside, so that the bearing segments (30a, 30b) are held together.

10. Angle sensor (1) according to one of the preceding claims, **characterized in that** a lubricant store is formed between two bearing segments (30a, 30b).

11. Angle sensor (1) according to one of the preceding claims, **characterized in that** the receiving region (47) of the housing (40) is formed as a blind hole.

12. Method for producing an angle sensor (1) according to one of the preceding claims, **characterized in that** it comprises the following steps:
- providing the shaft (20) with the first sensor element (28) and the housing (40) with the second sensor element (51),
- fastening the bearing segments (30a, 30b) to one another around the shaft (20), so that the bearing segments (30a, 30b) form the shaft bearing (30) and respectively cover part of the bearing circumference,
- inserting the shaft (20) with the shaft bearing (30) into a receiving region (47) of the housing (40) and axially securing the shaft bearing (30), the axial securing of the shaft bearing (30) comprising the caulking of the domes formed as rivet heads or the caulking of the peripheral rib on the housing, so that there forms an undercut, which secures the shaft bearing (30) axially with respect to the housing (40).

## Revendications

1. Capteur d'angle (1) permettant de détecter un angle de rotation sur la base d'une position angulaire relative d'un champ physique, comprenant
- un premier et un deuxième élément capteur (28, 51) entre lesquels le champ physique peut être transmis, le premier élément capteur (28) étant réalisé sous forme d'élément émetteur et le deuxième élément capteur (51) étant réalisé sous forme d'élément récepteur,
- un arbre (20) auquel est fixé le premier élément capteur (28),
- un boîtier (40) auquel est fixé le deuxième élément capteur (51), le boîtier (40) comprenant une zone de réception (47) pour recevoir l'arbre (20),
- un palier d'arbre (30) doté d'une surface de palier (34) côté palier pour supporter l'arbre (20) dans la zone de réception (47) du boîtier (40),
**caractérisé en ce que** le palier d'arbre (30) est formé par au moins deux segments de palier séparés (30a, 30b) qui couvrent respectivement une partie de la circonférence de palier, le palier d'arbre (30) étant fixé au boîtier (40) sans interstice avec une deuxième surface d'appui (32) par des dômes matés, réalisés sous forme de têtes de rivet, ou par une nervure périphérique matée.

2. Capteur d'angle (1) selon la revendication 1, **caractérisé en ce que** la surface de palier (34) côté palier est disposée sur une zone conique de l'arbre (20) ou sur une zone en relief de l'arbre (20) aux extrémités de laquelle le palier d'arbre (30) est bloqué en déplacement axial.

3. Capteur d'angle (1) selon la revendication 2, **caractérisé en ce que** le palier d'arbre (30) est bloqué en déplacement axial par des épaulements d'arbre (21, 22) .

4. Capteur d'angle (1) selon l'une quelconque des revendications précédentes, **caractérisé en ce que** les segments de palier (30a, 30b) forment une douille cylindrique ou conique autour de l'arbre (20).

5. Capteur d'angle (1) selon l'une quelconque des revendications précédentes, **caractérisé en ce que** le palier d'arbre (30) avec une première surface d'appui (31) est adjacent à un épaulement de la zone de réception (47).

6. Capteur d'angle (1) selon l'une quelconque des revendications précédentes, **caractérisé en ce que** le palier d'arbre (30) est en grande partie ou complètement composé de matière plastique.

7. Capteur d'angle (1) selon l'une quelconque des revendications précédentes, **caractérisé en ce que** la surface de palier (34) côté palier présente un lubrifiant, de préférence du polytétrafluoréthylène.

8. Capteur d'angle (1) selon l'une quelconque des revendications précédentes, **caractérisé en ce que** les segments de palier (30a, 30b) sont fixés les uns aux autres par des crochets, des brides, des dômes de matage, des vis ou des rivets.

9. Capteur d'angle (1) selon l'une quelconque des revendications précédentes, **caractérisé en ce que** du côté extérieur, le palier d'arbre (30) est adjacent au boîtier (40) de sorte que les segments de palier (30a, 30b) sont maintenus ensemble.

10. Capteur d'angle (1) selon l'une quelconque des revendications précédentes, **caractérisé en ce qu'**un réservoir d'agent lubrifiant est réalisé entre deux segments de palier (30a, 30b).

11. Capteur d'angle (1) selon l'une quelconque des revendications précédentes, **caractérisé en ce que** la zone de réception (47) du boîtier (40) est réalisée sous forme de trou borgne.

12. Procédé de fabrication d'un capteur d'angle (1) selon l'une quelconque des revendications précédentes, **caractérisé en ce qu'**il présente les étapes suivantes consistant à :
- équiper l'arbre (20) du premier élément capteur (28) et le boîtier (40) du deuxième élément capteur (51),
- fixer les segments de palier (30a, 30b) les uns aux autres autour de l'arbre (20) de sorte que les segments de palier (30a, 30b) forment le palier d'arbre (30) et couvrent respectivement une partie de la circonférence de palier,
- introduire l'arbre (20) muni du palier d'arbre (30) dans une zone de réception (47) du boîtier (40) et bloquer axialement le palier d'arbre (30), le blocage axial du palier d'arbre (30) comprenant le matage des dômes réalisés sous forme de têtes de rivet ou le matage de la nervure périphérique sur le boîtier de façon à créer une contre-dépouille qui bloque le palier d'arbre (30) axialement par rapport au boîtier (40).
